# FASCICULE DE BREVET EUROPEEN

(11) **EP 1 616 753 B1**
(45) Date de publication et mention de la délivrance du brevet: **04.05.2011**
(21) Numéro de dépôt: 05291152.6
(22) Date de dépôt: 27.05.2005
(51) Int. Cl.: B60Q 1/04

(54) **Dispositif d'éclairage pour véhicule automobile à sécurité renforcée en cas de choc**
Beleuchtungseinrichtung für Kraftfahrzeuge mit erhöhter Sicherheit bei einem Aufprall
Lighting device for motor vehicles with enhanced safety in case of impact

(30) Priorité: 01.06.2004 FR 0405860
(43) Date de publication de la demande: 18.01.2006
(73) Titulaire: VALEO VISION, 93012 Bobigny Cedex (FR)
(72) Inventeur: Arlon, Philippe, 77330 Ozoir la Ferriere (FR)

(56) Documents cités:
- EP-A- 1 122 126
- EP-A- 1 400 405
- EP-A- 1 400 408
- PATENT ABSTRACTS OF JAPAN vol. 2000, no. 25, 12 avril 2001 (2001-04-12) -& JP 2001 213225 A (MAZDA MOTOR CORP), 7 août 2001 (2001-08-07)

## Description

L'invention concerne en général les dispositifs d'éclairage pour véhicules automobiles.

Plus précisément, l'invention concerne selon un premier aspect un dispositif d'éclairage notamment du type projecteur destiné à être fixé sur une face avant d'un véhicule automobile et présentant une zone de choc, ce véhicule comprenant un élément de structure rigide s'étendant à proximité de la zone de choc, le projecteur comprenant un boîtier présentant une partie entourant au moins partiellement cet élément.

Des dispositifs de ce type sont connus de l'art antérieur. Ils présentent le défaut que, en cas de choc piéton sur la zone de choc du projecteur, l'élément de structure constitue un point dur qui peut blesser le piéton. La tête du piéton peut par exemple heurter la glace du projecteur, le boîtier s'écrasant jusqu'à ce que la glace du projecteur soit brusquement stoppée dans sa course d'enfoncement par l'organe de structure. Ceci crée un impact sur la tête du piéton qui peut entraîner des blessures graves.

Le document EP1400408 décrit un projecteur selon le préambule de la revendication 1 agencé pour qu'en cas de choc, ce projecteur se déplace vers l'arrière. Ce déplacement agit sur des moyens prévus à cet effet et amortissant l'effort généré par ce choc.

Dans ce contexte, la présente invention a pour but de pallier le défaut mentionné ci-dessus.

A cette fin, le dispositif de l'invention défini dans la revendication 1, est tel que le boîtier comprend une zone locale à déformation contrôlée permettant d'amortir au moins partiellement un choc sur la zone de choc du projecteur.

Avantageusement, la zone locale à déformation contrôlée peut s'étendre au voisinage de l'élément de structure. Elle se trouve en correspondance avec cet élément rigide de la structure, en vis-à-vis de cet élément qui va constituer un « point dur » en cas de choc. Elle se trouve avantageusement dans un décrochement dans le profil de la paroi externe du boîtier du dispositif d'éclairage.

De préférence, la zone à déformation contrôlée est ménagée dans une partie supérieure du boîtier. On comprend par « supérieur », « inférieur », « haut », « bas », « vertical », « horizontal », « arrière « ou « avant » dans tout le présent texte en fonction du positionnement normal du dispositif d'éclairage une fois monté sur le véhicule.

Dans un mode de réalisation possible de l'invention, le boîtier forme des plis dans la zone à déformation contrôlée.

Ces plis peuvent s'étendre suivant la direction transversale ou longitudinale.

Avantageusement, la zone plissée peut former un appendice interposé entre ladite partie du boîtier et l'élément de structure.

Selon l'invention, le boîtier présente une amorce de rupture dans ladite zone à déformation contrôlée, rendant cette zone fusible en cas de choc.

Selon un exemple qui ne fait pas partie de l'invention, le boîtier peut comprendre au moins une patte de fixation sur la structure du véhicule, dont au moins une branche s'étend à partir de la zone à déformation contrôlée suivant une direction principale, l'amorce de rupture s'étendant dans le prolongement de la branche.

Alternativement, le boîtier peut comprendre au moins une patte de fixation sur la structure du véhicule, dont au moins une branche s'étend suivant une direction principale à partir de la zone, l'amorce de rupture étant ménagée dans la branche et s'étendant perpendiculairement à la direction principale.

De plus, le boîtier peut comprendre des nervures de renfort s'étendant en travers de l'amorce de rupture, d'épaisseurs respectives choisies pour déterminer l'effort de rupture de l'amorce.

Dans encore une autre alternative, ladite zone à déformation contrôlée peut former un caisson de fixation du boîtier sur l'élément de structure, ledit caisson formant après rupture de l'amorce un élément amortisseur interposé entre la partie du boîtier et l'élément de structure.

Dans un autre mode de réalisation qui ne fait pas partie de l'invention, la zone à déformation contrôlée peut entourer une douille recevant une lampe du dispositif d'éclairage.

Alternativement, le boîtier peut comprendre une douille recevant une lampe du dispositif d'éclairage, cette douille constituant au moins une partie de la zone à déformation contrôlée.

Par ailleurs, selon l'invention, le dispositif d'éclairage peut comprendre un organe d'absorption d'énergie interposé entre ladite partie du boîtier et l'élément rigide (qui peut être monté sur l'élément rigide ou sur le boîtier).

Dans ce cas, l'organe d'absorption d'énergie peut comporter un matériau expansé ou d'une structure en nid d'abeille, par exemple d'une mousse de polypropylène ou de polyuréthane.

L'organe d'absorption d'énergie peut aussi comporter des nervures ménagées sur ladite partie du boîtier et s'étendant jusqu'à la pièce de structure (ou réciproquement).

Selon un second aspect, l'invention concerne un véhicule automobile présentant une zone de choc et comprenant un élément de structure rigide s'étendant à proximité de la zone de choc et un dispositif d'éclairage présentant au moins certains des caractéristiques ci-dessus, la zone locale à déformation contrôlée du boîtier du dispositif d'éclairage étant ménagée au voisinage de l'élément de structure. L'invention s'intéresse particulièrement aux projecteurs qui sont montés dans le véhicule, avec un profil arrière de boîtier tel qu'il puisse « entourer » partiellement un élément de structure rigide transversal à l'axe longitudinal du véhicule. Il s'agit notamment de profils arrières de boîtier de projecteur présentant un décrochement dans lequel se loge cet élément de structure en traverse, décrochement au niveau duquel se trouve la ou les zones locales à déformation contrôlée.

D'autres caractéristiques et avantages de l'invention ressortiront clairement de la description qui en est faite ci-dessous, à titre indicatif et nullement limitatif, en référence aux figures annexées, parmi lesquelles :
- La figure 1 est une vue de côté de l'avant d'un véhicule automobile, montrant l'implantation d'un projecteur d'un dispositif d'éclairage conforme au mode de réalisation l'invention,
- la figure 2 est une vue partielle en coupe longitudinale de l'avant du véhicule de la figure 1,
- la figure 3 est une vue agrandie d'un détail III de la figure 2, montrant un exemple de réalisation qui ne fait pas partie de l'invention.
- la figure 4 est une vue similaire à celle de la figure 3, montrant un mode de réalisation de l'invention
- la figure 5 est une vue de côté en coupe transversale du dispositif de la figure 4, considérée suivant l'incidence de la flèche V de la figure 4,
- la figure 6 est une vue similaire à celle de la figure 3, illustrant un second mode de réalisation de l'invention,
- la figure 7 est une vue similaire à celle de la figure 3, montrant une première variante de réalisation, qui ne fait pas partie de l'invention.
- la figure 8 est une vue en perspective illustrant une seconde variante de réalisation, qui ne fait pas partie de l'invention.
- la figure 9 est une vue en coupe transversale illustrant une troisième variante de réalisation qui ne fait pas partie de l'invention;
- la figure 10 est une vue similaire à celle de la figure 3, montrant une quatrième variante du second mode de réalisation,
- la figure 11 est une vue similaire à celle de la figure 3, montrant une variante applicable au mode de réalisation de l'invention,
- la figure 12 est une vue similaire à celle de la figure 3, montrant une autre variante applicable au mode de réalisation de l'invention,
- les figures 13A et 13B sont des vues partielles agrandies selon la flèche XIII de la figure 12, montrant les nervures d'absorption respectivement avant et après un choc.
- la figure 14 est une vue partielle en coupe longitudinale similaire à celle de la figure 2, illustrant un autre mode de réalisation qui ne fait pas partie de l'invention, et
- les figures 15A à 15C sont des vues agrandies d'un détail XV de la figure 14, respectivement immédiatement avant un choc, dans une première phase du choc et dans une seconde phase du choc suivant la première.

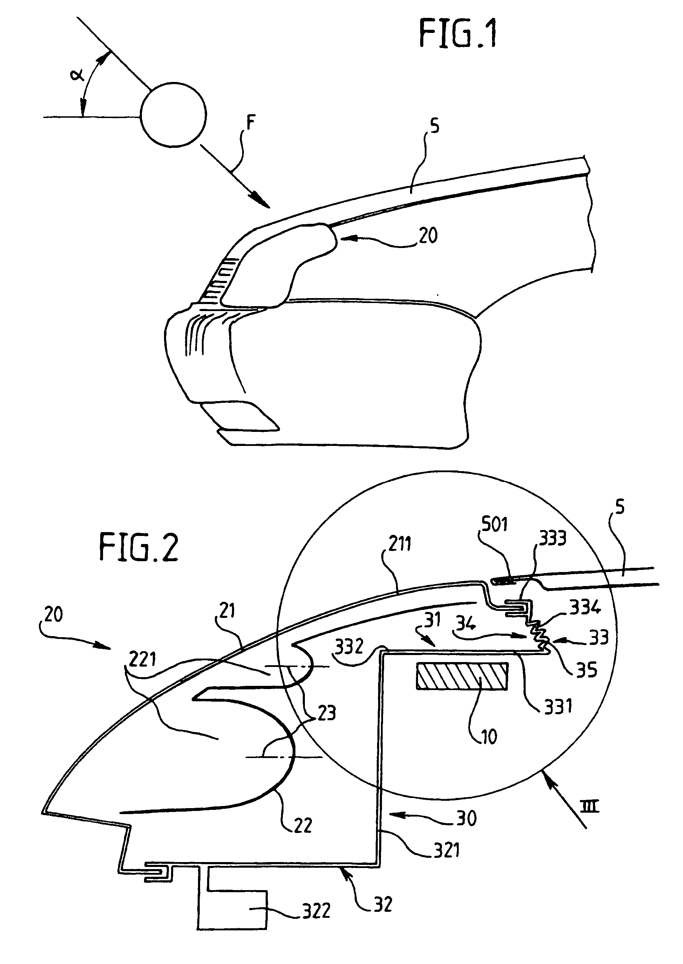

La figure 1 représente la partie avant d'un véhicule automobile pourvu d'un dispositif d'éclairage à deux projecteurs 20, ces projecteurs étant fixés sur la face avant du véhicule, des deux côtés transversaux opposés de cette face. Ce véhicule comprend en outre un capot 5 incliné vers le bas quand on le suit de l'arrière vers l'avant, et un élément de structure 10 rigide, visible sur la figure 2, typiquement une traverse s'étendant transversalement sur toute la largeur du véhicule et solidaire de la structure de ce véhicule.

Chaque projecteur 20 comprend un boîtier 30 ouvert d'un côté avant, une glace 21 fermant le boîtier 30 du côté avant, un réflecteur 22 fixé dans le boîtier 30 et formant un ou plusieurs logements 221 ouverts vers l'avant, et une ou plusieurs sources lumineuses 23 alimentées électriquement disposées dans les logements 221.

Le boîtier 30 est une coquille mince, moulée en matière plastique.

Le projecteur 20 est disposé devant le capot 5, la glace 21 étant profilée pour s'inscrire dans le prolongement de ce capot 5. On voit sur la figure 2 que, considérée en coupe dans un plan vertical longitudinal, la glace 21 présente une section arquée, s'étendant vers l'avant et vers le bas à partir d'un bord libre transversal avant 501 du capot 5, de concavité tournée vers l'intérieur du projecteur 20.

La traverse 10 est disposée à la verticale du bord libre avant 501 du capot 5, à proximité sous celui-ci. Sa plus grande dimension est horizontale et transversale.

Le boîtier 30 du projecteur 20 présente une partie 31 entourant partiellement la traverse 10, d'un côté avant et d'un côté supérieur de la traverse 10.

Plus précisément, comme on le voit sur la figure 2, le boîtier 30 comprend une partie avant 32 disposée en avant de la traverse 10 et recevant les sources lumineuses 22, et une partie supérieure 33 solidaire de la partie avant 32 et interposée verticalement entre le bord libre avant 501 du capot 5 et la traverse 10.

La partie avant 32 est délimitée d'un côté arrière par une paroi arrière verticale transversale 321 légèrement écartée de la traverse 10. Elle porte d'un côté inférieur une patte inférieure 322 de fixation sur la structure du véhicule.

La partie supérieure 33 est délimitée d'un côté inférieur par une paroi inférieure 331 s'étendant légèrement au-dessus de la traverse 10, cette paroi inférieure 331 étant solidaire par un bord transversal avant 332 de la paroi arrière 321. La paroi inférieure 331 est horizontale ou légèrement inclinée vers le bas quand on la suit de l'arrière vers l'avant.

La partie 31 du boîtier 30 entourant l'élément de structure 10 est donc ici constituée des parois arrière 321 et supérieure 331.

La partie supérieure 33 comprend en outre une rainure 333 de fixation d'un côté supérieur de la glace 21. La glace 21 est par ailleurs engagée d'un côté inférieur dans une autre rainure portée par la partie avant 32 du boîtier 30.

Quand le capot 5 est fermé, son bord libre avant 501 s'étend immédiatement au-dessus de la rainure 333 ou repose sur celle-ci.

On notera que la partie supérieure 33 du boîtier 30 présente une faible épaisseur selon la direction verticale relativement à la partie avant 32.

La partie supérieure de la glace 21, située le long du bord libre avant 501 du capot 5, constitue une zone 211 exposée aux chocs, en particulier en cas de choc piéton quand le piéton est de petite taille.

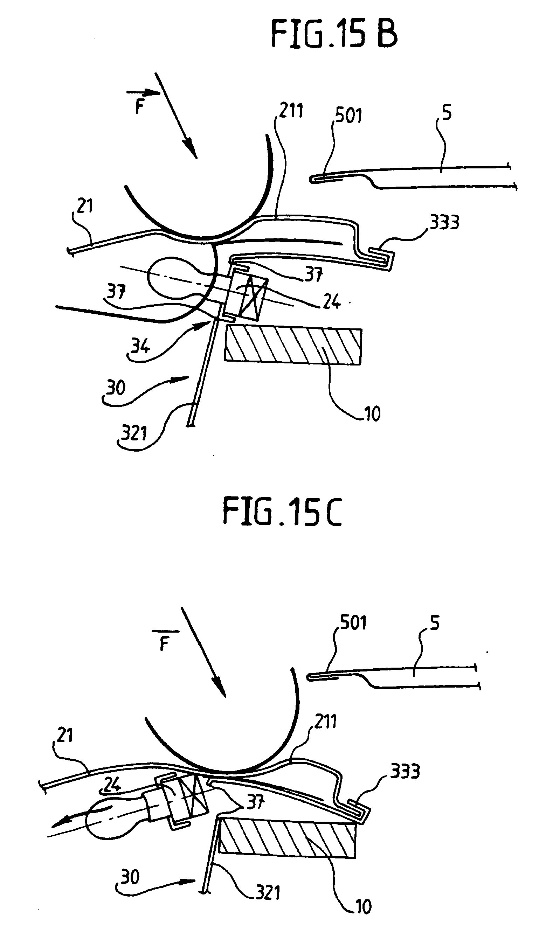

Ces chocs génèrent des efforts s'exerçant suivant une direction générale orientée vers la traverse 10, c'est-à-dire vers le bas et vers l'arrière, cette direction étant représentée par les flèches F des figures 1 à 15 A/C.

Selon la norme européenne en vigueur concernant la sécurité des piétons, le choc à prendre en compte pour la conception du véhicule exerce un effort orienté suivant une direction formant un angle α de 50° par rapport à l'horizontale, comme illustré sur la figure 1.

Selon l'invention, le boîtier 30 comprend au voisinage de l'élément de structure 10 une zone 34 à déformation contrôlée permettant d'amortir au moins partiellement un choc sur la zone de choc 211 du projecteur 10.

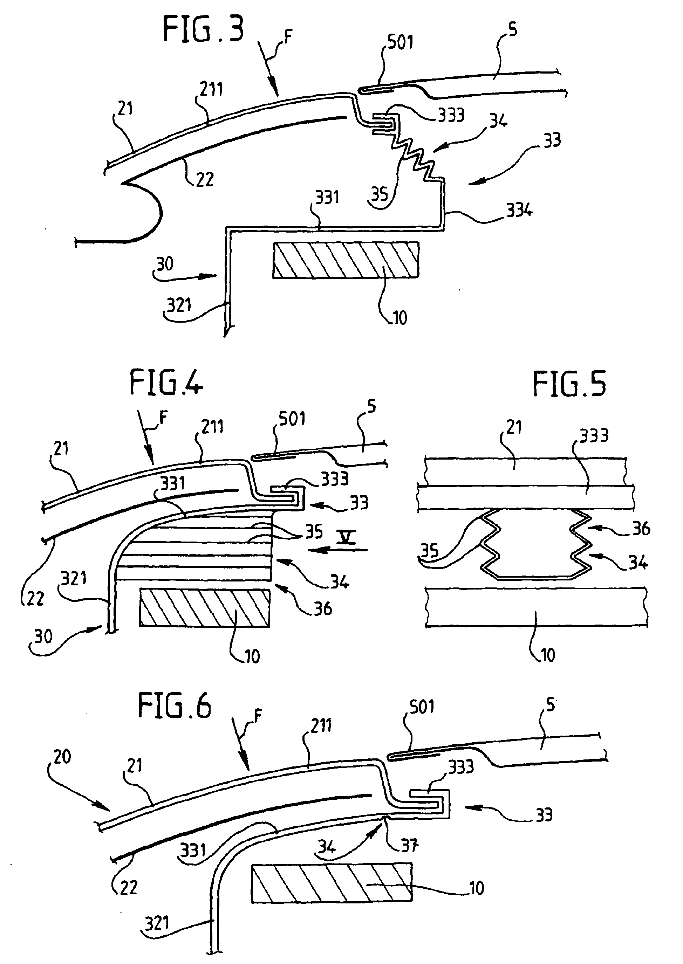

Dans un mode de réalisation de l'invention, représenté sur les figures 4 à 5, le boîtier 10 forme des plis 35 dans la zone à déformation contrôlée 34.

Ces plis 35 s'étendent par exemple suivant la direction transversale et sont disposés les uns à côté des autres, parallèlement les uns aux autres. Ils présentent chacun typiquement une section en Ω perpendiculairement à la direction transversale, formant ainsi une série de vagues. Ils peuvent également présenter chacun une section en V perpendiculairement à la direction transversale, formant ainsi un accordéon dans la zone 34. Ces plis 35 peuvent également s'étendre suivant une direction longitudinale.

Dans un exemple de réalisation illustré sur les figures 2 et 3 qui ne fait pas partie de l'invention, la zone plissée 34 s'étend d'un côté arrière de la partie supérieure 33 du boîtier 30.

Plus précisément, la partie supérieure 33 comprend une paroi postérieure 334 transversale solidaire d'un bord arrière de la paroi inférieure 331, cette paroi postérieure 334 s'étendant d'abord verticalement vers le haut à partir de la paroi inférieure, puis en oblique vers l'avant et vers le haut jusqu'à un bord libre portant la rainure 333. La zone plissée 34 correspond à la partie oblique de la paroi postérieure 334. On voit donc que le profil arrière du boîtier prévoit un décrochement délimité par la paroi verticale 321 et la paroi horizontale 331, dans lequel est logée la traverse rigide 10. Ce décrochement peut bien sûr prendre d'autres formes similaires, avec une hauteur de paroi verticale ou une longueur de paroi horizontale différente notamment. Ce décrochement a les dimensions appropriées en fonction de la dimension et de la configuration de la traverse 10 du véhicule considéré. La traverse a de préférence une section de type rectangulaire ou carrée. Deux de ses côtés se trouvent, comme représenté en figure 2, sensiblement parallèles aux parois 321 et 331 du boîtier du projecteur.

Dans le mode de réalisation représentée sur les figures 4 et 5, la zone plissée 34 forme un appendice 36 interposé entre ladite partie 31 du boîtier 30 entourant la traverse 10, et cette traverse 10.

Cet appendice 36 est venu de moulage avec le reste du boîtier 30, et présente une forme générale parallélépipédique. L'appendice 36 est logé dans l'angle formé par la paroi supérieure 331 et la paroi arrière 321, et forme une coquille creuse délimitée par quatre faces pleines des deux côtés transversaux, vers le bas et vers l'arrière, et deux faces évidées creusées dans les parois supérieure 331 et arrière 321, de telle sorte que l'intérieur de l'appendice 36 communique avec l'intérieur du boîtier 30.

L'appendice 36 repose sur la traverse 10 par sa face tournée vers le bas, ses deux faces latérales et sa face arrière constituant la zone plissée 34.

En cas de choc sur la zone de choc 211 de la glace 21 du projecteur 20, la zone plissée 34 du boîtier 30 s'écrase de façon préférentielle, la géométrie des plis 35 et l'épaisseur du matériau constituant la zone 34 étant choisis de façon à amortir une énergie déterminée.

Comme illustré sur les figures 5 à 10, le boîtier 30 présente une amorce de rupture 37 dans la zone à déformation contrôlée 34, rendant cette zone fusible en cas de choc.

On voit sur la figure 6 que selon l'invention, cette amorce de rupture 37 peut être ménagée sur la paroi inférieure 331. Elle peut être ménagée également sur la paroi arrière 321.

L'amorce 37 est typiquement constituée d'une zone de moindre épaisseur du matériau constituant le boîtier, et présentant donc une moindre résistance mécanique. Cette zone est typiquement une ligne droite.

En cas de choc sur le projecteur, l'amorce 37 se déchire, cette déchirure se propageant ensuite à d'autres zones du boîtier 30, de telle sorte qu'une partie de l'énergie du choc est absorbée.

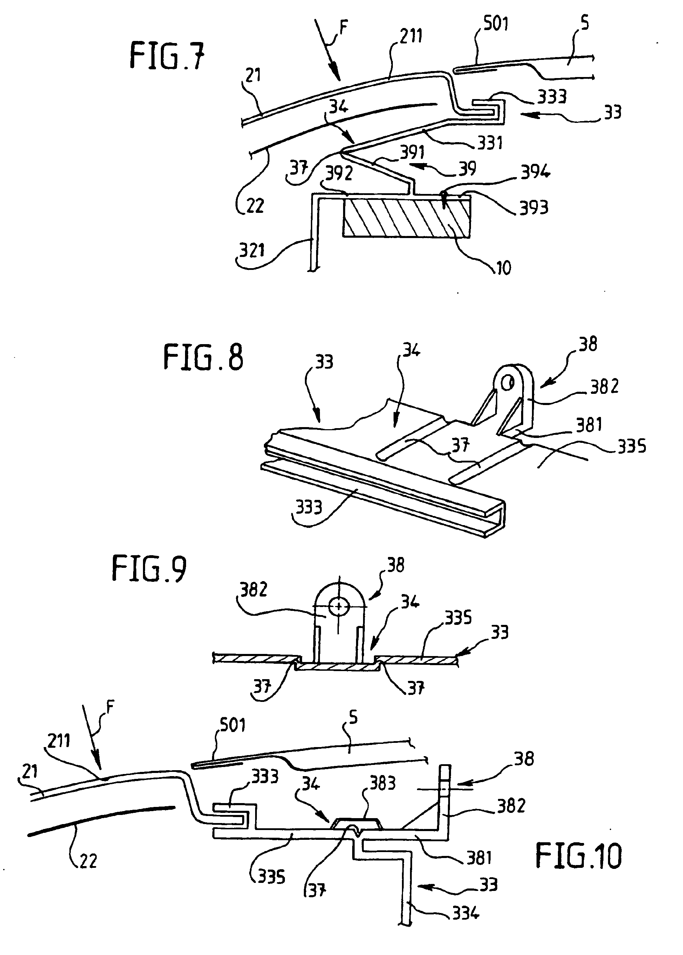

Dans une variante de réalisation correspondant aux figures 8 et 9 qui ne fait pas partie de l'invention, la partie supérieure 33 du boîtier 30 est délimitée vers l'arrière par une paroi postérieure 334 verticale et transversale, et vers le haut par une paroi supérieure 335 horizontale prolongeant la paroi postérieure 334 vers l'avant. Le boîtier 30 comprend en outre une patte 38 de fixation sur la structure du véhicule, cette patte étant venue de moulage avec le reste du boîtier.

La patte 38 présente la forme d'une équerre, et comprend une première branche 381 s'étendant suivant une direction principale longitudinale, vers l'arrière, à partir de l'angle entre les parois postérieure 334 et supérieure 335, et une seconde branche 382 fixée sur la structure du véhicule, cette seconde branche 382 prolongeant la première vers le haut à partir d'une extrémité de cette première branche opposée audit angle. La première branche s'étend donc dans le prolongement de la paroi supérieure 335.

La zone à déformation contrôlée 34 est constituée dans ce cas par la zone de la paroi supérieure 335 à laquelle se rattache la patte 38. Le boîtier 30 comprend deux amorces de rupture 37 mutuellement parallèles, s'étendant suivant la direction principale, dans le prolongement de la première branche 381. Ces deux amorces 37 sont écartées suivant la direction transversale d'une largeur supérieure à la largeur transversale de la première branche 381.

Comme le montre la figure 9, la zone 34 peut comprendre une rainure longitudinale creusée entre les deux amorces 37, située dans le prolongement de la première branche 381, les amorces constituant les deux bords de la rainure.

Suivant une variante de réalisation illustrée sur la figure 10 qui ne fait pas partie de l'invention, l'amorce de rupture 37 est ménagée dans la première branche 381 et s'étend perpendiculairement à la direction principale, c'est-à-dire transversalement, sur toute la largeur de la première branche 381.

De préférence, comme le montre la figure 10, l'amorce est ménagée sur la ligne de jonction entre la première branche 381 et la paroi supérieure 335.

Le boîtier 30 peut comprendre en outre des nervures de renfort 383 s'étendant longitudinalement en travers de l'amorce de rupture 37, et réunissant les deux bords opposés de l'amorce de rupture 37. Les épaisseurs respectives de ces nervures 383 et leur nombre sont choisis pour déterminer l'effort de rupture de l'amorce 37.

Selon encore une autre variante de réalisation qui ne fait pas partie de l'invention, ladite zone à déformation contrôlée 34 forme un caisson de fixation 39 du boîtier 30 sur l'élément de structure 10, ledit caisson formant après rupture de l'amorce 37 un élément amortisseur interposé entre la partie 31 du boîtier 30 entourant l'élément de structure 10 et cet élément. Cette variante est illustrée sur la figure 7.

Le caisson 39 est par exemple venu de moulage avec la paroi inférieure 392, et présente un fond inférieur plat 391 rigidement fixé sur la traverse 10, et un fond supérieur 391. Dans ce cas, la paroi inférieure 331 est inclinée vers le bas quand on la parcourt de l'arrière vers l'avant.

Le fond inférieur 392 s'étend horizontalement à partir de la paroi inférieure 331 vers l'arrière, le fond supérieur 391 s'étendant sensiblement en oblique vers le haut et vers l'avant à partir d'un bord du fond inférieur 391 opposé à la paroi inférieure 331, jusqu'à la paroi inférieure 331. Les lignes de jonction des fonds inférieur et supérieur 391 et 392 avec la paroi inférieure 331 délimitent une ouverture par laquelle l'intérieur du caisson 39 communique avec l'intérieur du boîtier 30.

L'amorce de rupture 37 s'étend le long de la ligne de jonction du fonds supérieur 391 avec la paroi inférieure 331. Ainsi, en cas de choc, la rupture de l'amorce 37 permet d'absorber une première partie de l'énergie. Cette rupture libère un côté du fond supérieur 391, ce fond pouvant ensuite s'écraser vers le fond inférieur 392 en absorbant une seconde partie de l'énergie du choc.

Le fond inférieur 392 est rigidement fixé sur un côté supérieur de la traverse 10 par l'intermédiaire d'une patte 393 prolongeant le fond inférieur horizontalement vers l'arrière, cette patte étant traversée par une vis 394 s'engageant dans un trou fileté ménagé dans la traverse.

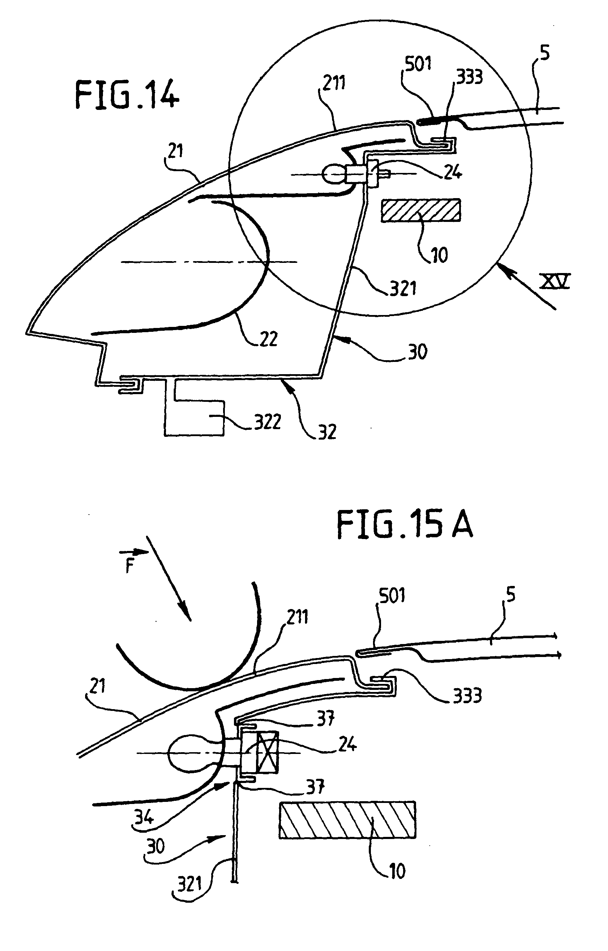

Dans un autre mode de réalisation qui ne fait pas partie de l'invention, correspondant aux figures 14 et 15A à 15C, le boîtier 30 comprend une douille 24 recevant le culot d'une ampoule du dispositif d'éclairage. Comme le montre la figure 14, cette douille 24 est portée par la paroi arrière 321 de la partie avant 32 du boîtier 30, en un point de cette paroi situé au-dessus de la traverse 10 et en dessous de la paroi inférieure 321.

La douille 24 présente une partie de réception du culot de la lampe s'étendant d'un côté avant de la paroi arrière 321 et une partie portant les connexions électriques faisant saillie d'un côté arrière de ladite paroi arrière 321. La partie de réception traverse le réflecteur 22 par un orifice ménagé dans celui-ci à cet effet.

Cette douille 24 est généralement réalisée en un matériau plastique dur ou dans un matériau métallique et constitue elle-même un point dur qui peut blesser un piéton en cas de choc si elle est arrêtée dans sa course d'enfoncement par la traverse 10.

Dans une première variante de réalisation correspondant aux figures 15A à 15C, la zone à déformation contrôlée 34 est une zone de la paroi arrière 321 entourant la douille 24 et présentant au moins une amorce de rupture 37 de façon à ce que la douille 24 se désolidarise du reste du boîtier 30 en cas de choc.

Cette amorce de rupture est typiquement constituée d'une ligne le long de laquelle le boîtier présente une moindre épaisseur de plastique, cette ligne entourant la douille 24.

On voit sur la figure 15B que, en cas de choc, la partie arrière de la douille 24 vient porter contre la traverse 10, du fait de l'effort exercé sur la glace 21 et repris par le boîtier 30 et le réflecteur 22.

Quand l'effort exercé sur la douille 24 dépasse une valeur prédéterminée, l'amorce de rupture 37 s'ouvre, la douille 24 se désolidarise du boîtier 30 et tombe d'un côté avant. Elle ne constitue alors plus un point dur interposé entre le piéton et la traverse 10.

Dans une variante de réalisation, la zone à déformation contrôlée 34 entoure la douille 24 et absorbe une partie de l'énergie du choc par déformation. Elle est constituée d'un matériau rigide déformable, conformé de façon à permettre l'amortissement du choc. La zone peut ainsi être constituée de mousse de polyuréthane ou de polypropylène et éventuellement être conformée de façon à présenter des plis entourant la douille 24.

Dans encore une autre variante, la douille 24 elle-même constitue au moins une partie de la zone à déformation contrôlée. Dans ce cas, la douille 24 est constituée d'un matériau permettant d'absorber une partie de l'énergie du choc par déformation.

Dans le mode de réalisation de l'invention décrit ci-dessus, le dispositif peut comprendre, en plus de la zone à déformation contrôlée 34, un organe d'absorption d'énergie 50 interposé entre ladite partie 31 du boîtier 30 entourant l'élément rigide 10 et ledit élément rigide 10.

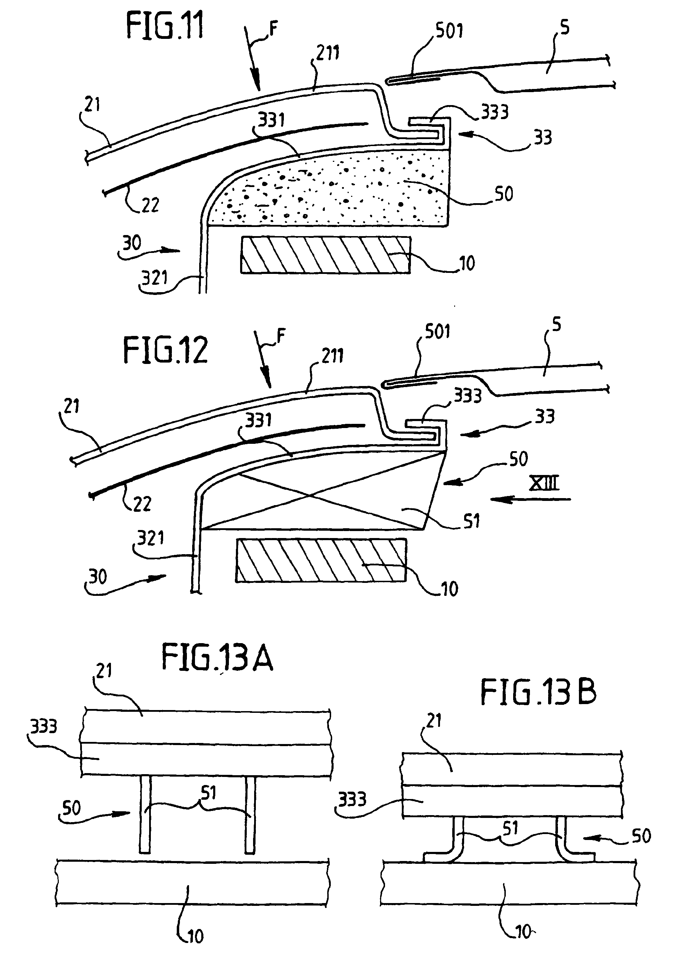

Comme on le voit sur la figure 11, l'organe d'absorption d'énergie 50 peut être constitué d'un bloc de matériau expansé ou d'une structure en nid d'abeille. Le matériau expansé est par exemple une mousse de métal ou un matériau plastique, par exemple une mousse d'aluminium. La structure en nid d'abeille est une structure alvéolée, les alvéoles pouvant adopter de multiples formes, cubique, parallélépipédique, sphérique, ou autre.

On voit sur les figures 12 et 13A/B, que l'organe d'absorption d'énergie 50 peut également être constitué de deux nervures 51 ménagées sur ladite partie 31 du boîtier 30 entourant l'élément rigide 10 et s'étendant jusqu'à la pièce de structure 10.

Ces nervures 51 sont venues de moulage avec le reste du boîtier 30. Elles s'étendent dans des plans mutuellement parallèles, longitudinaux et verticaux, dans l'angle formé par la paroi arrière 321 et la paroi inférieure 331 et sont solidaires de ces parois. Elles sont libres par rapport à la traverse 10.

Comme on le voit sur les figures 13A et 13B, en cas de choc sur la zone de choc 211 du projecteur 20, les nervures 51 viennent de poser sur la traverse 10, et les parties inférieures de ces nervures 51 glissent transversalement sur la traverse en s'écartant mutuellement.

Ce mouvement permet d'absorber une partie de l'énergie du choc.

L'organe d'absorption du choc peut comprendre plus de deux nervures, par exemple trois ou quatre nervures mutuellement parallèles.

Les nervures peuvent également s'étendre transversalement.

Le dispositif d'éclairage décrit ci-dessus peut présenter de multiples variantes sans sortir du cadre de l'invention.

Le boîtier 30 peut présenter une forme différente de celle représentée sur la figure 1.

Dans le mode de réalisation de l'invention, l'appendice 36 peut présenter diverses formes, non parallélépipédiques, en fonction de l'énergie à absorber. Perpendiculairement à la direction verticale, l'appendice 36 peut présenter une section ronde, ovale, en arc de cercle, trapézoïdale ou autre.

Dans un autre mode de réalisation qui ne fait pas partie de l'invention, la patte de fixation 38 peut être solidaire d'une autre partie du boîtier, par exemple de la paroi inférieure 331.

Le boîtier 30 peut comporter une, deux ou plus de deux amorces de rupture 37. Ces amorces peuvent être rectilignes, courbes ou présenter toute autre forme adaptée.

L'élément de structure 10 peut être une traverse, mais peut être également un autre élément rigide du véhicule.

Le boîtier est typiquement réalisé en un matériau plastique, mais peut également être réalisé en un matériau métallique, par exemple en aluminium.

On comprend bien à la lumière de la description donnée ci-dessus que le dispositif d'éclairage est particulièrement avantageux.

Il permet d'obtenir un amortissement des chocs sur le projecteur de façon particulièrement économique, à l'aide d'une zone locale à déformation contrôlée de petite taille, ménagée sur le boîtier du projecteur.

Il n'est donc pas nécessaire d'ajouter des équipements accessoires au projecteur pour obtenir l'amortissement recherché. La zone à déformation contrôlée est venue de moulage avec le reste du boîtier, ce qui est commode et économique.

L'invention se décline en de multiples variantes, permettant d'adapter le dispositif d'éclairage à toutes sortes de véhicules, en fonction de la géométrie de l'avant de ce véhicule, de la géométrie du projecteur, de l'énergie du choc à absorber.

En option, il est possible d'augmenter encore la capacité d'absorption du dispositif en ajoutant un organe d'absorption supplémentaire, constitué de nervures, d'un bloc de matériau expansé ou d'un bloc de matériau en nid d'abeilles.

La sécurité des piétons est particulièrement bien assurée par ce dispositif, puisque la zone à déformation contrôlée et l'éventuel organe d'absorption d'énergie permettent de protéger celui-ci du point dur constitué par l'élément de structure 10.

## Revendications

1. Dispositif d'éclairage du type projecteur (20) destiné à être fixé sur une face avant d'un véhicule automobile et présentant une zone de choc (211), le véhicule comprenant un élément de structure (10) rigide s'étendant à proximité de la zone de choc (211), le projecteur (20) comprenant un boîtier (30) comprenant une zone locale à déformation contrôlée (34) permettant d'amortir au moins partiellement un choc sur la zone de choc (211) du projecteur (20), le boîtier (30) présentant une partie (31) entourant au moins partiellement cet élément (10), l'élément de structure constituant un point dur susceptible d'être atteint par la zone de choc (211) en cas de choc avec un piéton, ladite zone locale à déformation contrôlé (34) permettant de protéger le piéton du point dur constitué par l'élément de structure en cas de choc avec un piéton générant un effort selon une direction générale (F) orientée vers le bas et vers l'arrière, vers ledit élément de structure (10),
ledit boîtier (30) comprenant un profil arrière tel qu'il puisse entourer partiellement ledit élément de structure (10), ledit profil présentant un décrochement dans le profil de la paroi externe du boîtier (10), dans lequel se loge ledit élément de structure, ladite zone locale à déformation contrôlée (34) se trouvant dans ledit décrochement,
le boîtier (30) présentant une amorce de rupture (37) dans ladite zone à déformation contrôlée (34), ladite amorce étant ménagée sur une paroi du boîtier, notamment une paroi inférieure (331) ou une paroi arrière (321), rendant cette zone à déformation contrôlée (34) fusible en cas de choc, **caractérisé en ce que** ladite amorce de rupture est une amorce se déchirant, entraînant la propagation de la déchirure à d'autres zones du boîtier (30), de telle sorte qu'une partie de l'énergie du choc est absorbée.

2. Dispositif selon la revendication 1, **caractérisé en ce que** la direction dudit effort est orientée suivant une direction formant un angle α de 50° par rapport à l'horizontale.

3. Dispositif selon la revendication 1 ou 2, **caractérisé en ce que** ladite partie (31) entourant au moins partiellement l'élément de structure (10), entoure partiellement l'élément de structure (10), d'un côté avant et d'un côté supérieur de l'élément de structure (10).

4. Dispositif selon l'une quelconque des revendications précédentes, **caractérisé en ce que** la zone locale à déformation contrôlée (34) s'étend au voisinage de l'élément de structure (10).

5. Dispositif selon l'une quelconque des revendications précédentes, **caractérisé en ce que** la zone de choc (211) est constituée par le bord supérieur de la glace (21) du projecteur, située le long du bord libre avant du capot (5) du véhicule.

6. Dispositif selon l'une quelconque des revendications précédentes, **caractérisé en ce que** la zone à déformation contrôlée (34) est ménagée dans une partie supérieure du boîtier (30).

7. Dispositif selon l'une quelconque des revendications précédentes, **caractérisé en ce que** le boîtier (30) forme des plis (35) dans la zone (34) à déformation contrôlée.

8. Dispositif selon la revendication 7, **caractérisé en ce que** les plis (35) s'étendent suivant la direction transversale ou longitudinale.

9. Dispositif selon la revendication 7 ou 8, **caractérisé en ce que** la zone (34) plissée forme un appendice (36) interposé entre ladite partie (31) du boîtier (30) et l'élément de structure (10).

10. Véhicule automobile présentant une zone de choc (211) et comprenant un élément de structure (10) rigide s'étendant à proximité de la zone de choc et un dispositif d'éclairage selon une quelconque des revendications 1 à 9, la zone locale à déformation contrôlée (34) du boîtier (30) du dispositif d'éclairage étant ménagée au voisinage de l'élément de structure (10).

## Claims

1. Lighting device of the headlight type (20) which is designed to be secured to a front surface of a motor vehicle, and has an impact area (211), the vehicle comprising a rigid structural element (10) which extends in the vicinity of the impact area (211), the headlight (20) comprising a housing (30) comprising a local area (34) with controlled deformation which makes it possible to damp at least partially an impact on the impact area (211) of the headlight (20), the housing (30) having a part (31) which surrounds this element (10) at least partially, the structural element constituting a hard point which can be reached by the impact area (211) in the event of impact with a pedestrian, the said local area (34) with controlled deformation making it possible to protect the pedestrian against the hard point constituted by the structural element, in the event of impact with a pedestrian which generates a force according to a general direction (F) which is oriented downwards and rearwards towards the said structural element (10), the said housing (30) comprising a rear profile such that it can surround the said structural element (10) partially, the said profile having a set-back in the profile of the outer wall of the housing (10) in which the said structural element is accommodated, the said local area (34) with controlled deformation being in the said set-back, the housing (30) having an incipient rupture (37) in the said area (34) with controlled deformation, the said incipient rupture being provided in a wall of the housing, in particular a lower wall (331) or a rear wall (321) which makes this area (34) with controlled deformation fusible in the event of an impact, **characterised in that** the said incipient rupture is an incipient rupture which tears, giving rise to propagation of the tear to other areas of the housing (30), such that part of the energy of the impact is absorbed.

2. Device according to claim 1, **characterised in that** the direction of the said force is oriented according to a direction which forms an angle α of 50° relative to the horizontal.

3. Device according to claim 1 or 2, **characterised in that** the said part (31) which surrounds the structural element (10) at least partially surrounds the structural element (10) partially on a front side and on an upper side of the structural element (10).

4. Device according to any one of the preceding claims, **characterised in that** the local area (34) with controlled deformation extends in the vicinity of the structural element (10).

5. Device according to any one of the preceding claims, **characterised in that** the impact area (211) is constituted by the upper edge of the glass (21) of the headlight, situated along the front free edge of the bonnet (5) of the vehicle.

6. Device according to any one of the preceding claims, **characterised in that** the area (34) with controlled deformation is provided in an upper part of the housing (30).

7. Device according to any one of the preceding claims, **characterised in that** the housing (30) forms folds (35) in the area (34) with controlled deformation.

8. Device according to claim 7, **characterised in that** the folds (35) extend according to the transverse or longitudinal direction.

9. Device according to claim 7 or claim 8, **characterised in that** the folded area (34) forms an appendage (36) which is interposed between the said part (31) of the housing (30) and the structural element (10).

10. Motor vehicle with an impact area (211) and comprising a rigid structural element (10) which extends in the vicinity of the impact area, and a lighting device according to any one of claims 1 to 9, the local area (34) with controlled deformation of the housing (30) of the lighting device being provided in the vicinity of the structural element (10).

## Patentansprüche

1. Beleuchtungsvorrichtung vom Typ Scheinwerfer (20), die zur Befestigung an einer Vorderseite eines Kraftfahrzeugs bestimmt ist und einen Kollisionsbereich (211) aufweist, wobei das Fahrzeug ein starres Strukturelement (10) umfasst, das in der Nähe des Kollisionsbereichs (211) verläuft, wobei der Scheinwerfer (20) ein Gehäuse (30) mit einem lokalen Bereich (34) kontrollierter Verformung umfasst, der es erlaubt, einen Aufprall auf den Kollisionsbereich (211) des Scheinwerfers (20) wenigstens teilweise abzuschwächen, wobei das Gehäuse (30) ein Teil (31) aufweist, das dieses Element (10) wenigstens zum Teil umgibt, wobei das Strukturelement eine harte Stelle bildet, die bei einem Zusammenstoß mit einem Fußgänger von dem Kollisionsbereich getroffen zu werden vermag, wobei bei einem Zusammenstoß mit einem Fußgänger der lokale Bereich (34) kontrollierter Verformung den Fußgänger vor der von dem Strukturelement gebildeten harten Stelle zu schützen erlaubt, indem eine Beanspruchung in einer allgemein nach unten und nach hinten verlaufenden Richtung (F) hin zu dem Strukturelement (10) erzeugt wird, wobei das Gehäuse (30) ein hinteres Profil aufweist, derart, dass es das Strukturelement (10) zum Teil umgeben kann, wobei das Profil im Profil der Außenwand des Gehäuses (30) einen Versatz aufweist, in dem das Strukturelement lagert, wobei sich der lokale Bereich (34) kontrollierter Verformung in diesem Versatz befindet, wobei das Gehäuse (30) in dem Bereich (34) kontrollierten Verformung eine Bruchlinie (37) aufweist, wobei diese Bruchlinie auf einer Wand des Gehäuses, insbesondere einer unteren Wand (331) oder einer Rückwand (321), ausgebildet ist, die diesen Bereich (34) kontrollierter Verformung bei einem Zusammenprall brechen lässt,
**dadurch gekennzeichnet, dass** die Bruchlinie ein brechender Anriss ist, wodurch sich der Riss auf andere Bereiche des Gehäuses (30) ausbreitet, so dass ein Teil der Energie des Aufpralls absorbiert wird.

2. Vorrichtung nach Anspruch 1,
**dadurch gekennzeichnet, dass** die Richtung der Beanspruchung in eine Richtung weist, die durch einen Winkel α von 50° bezüglich der Horizontalen gebildet ist.

3. Vorrichtung nach Anspruch 1 oder 2,
**dadurch gekennzeichnet, dass** der das Strukturelement (10) wenigstens teilweise umgebende Teil (31) das Strukturelement (10) auf einer Vorderseite und einer Oberseite des Strukturelements (10) zum Teil umgibt.

4. Vorrichtung nach einem der vorhergehenden Ansprüche,
**dadurch gekennzeichnet, dass** der lokale Bereich (34) kontrollierter Verformung in der Nähe des Strukturelements (10) verläuft.

5. Vorrichtung nach einem der vorhergehenden Ansprüche,
**dadurch gekennzeichnet, dass** der Kollisionsbereich (211) von dem oberen Rand der entlang des freien Rands der Motorhaube (5) des Fahrzeugs verlaufenden Scheibe (21) des Scheinwerfers gebildet ist.

6. Vorrichtung nach einem der vorhergehenden Ansprüche,
**dadurch gekennzeichnet, dass** der Bereich (34) kontrollierter Verformung in einem oberen Teil des Gehäuses (30) ausgebildet ist.

7. Vorrichtung nach einem der vorhergehenden Ansprüche,
**dadurch gekennzeichnet, dass** das Gehäuse (30) Falten (35) in dem Bereich (34) kontrollierter Verformung bildet.

8. Vorrichtung nach Anspruch 7,
**dadurch gekennzeichnet, dass** die Falten (35) in Quer- oder Längsrichtung verlaufen.

9. Vorrichtung nach Anspruch 7 oder 8,
**dadurch gekennzeichnet, dass** der Faltenbereich (34) einen Fortsatz (36) bildet, der zwischen dem Teil (31) des Gehäuses (30) und dem Strukturelement (10) eingefügt ist.

10. Kraftfahrzeug, das einen Kollisionsbereich (211) aufweist und ein starres, in der Nähe des Kollisionsbereichs verlaufendes Strukturelement (10) und eine Beleuchtungsvorrichtung nach einem der Ansprüche 1 bis 9 umfasst, wobei der lokale Bereich (34) kontrollierter Verformung des Gehäuses (30) der Beleuchtungsvorrichtung in der Nähe des Strukturelements (10) ausgebildet ist.
